(19) Europäisches Patentamt
European Patent Office
Office européen des brevets

(11) EP 2 841 501 B1

(12) **EUROPÄISCHE PATENTSCHRIFT**

(45) Veröffentlichungstag und Bekanntmachung des Hinweises auf die Patenterteilung:
**29.05.2019 Patentblatt 2019/22**

(21) Anmeldenummer: **13720323.8**

(22) Anmeldetag: **24.04.2013**

(51) Int Cl.:
***C08L 69/00*** *(2006.01)*

(86) Internationale Anmeldenummer:
**PCT/EP2013/058538**

(87) Internationale Veröffentlichungsnummer:
**WO 2013/160371 (31.10.2013 Gazette 2013/44)**

(54) **PC/ABS-ZUSAMMENSETZUNGEN MIT GUTER THERMISCHER UND CHEMISCHER BESTÄNDIGKEIT**

PC/ABS COMPOUNDS WITH GOOD THERMAL AND CHEMICAL RESISTANCE

COMPOSITIONS DE PC/ABS AVEC BONNE RÉSISTANCE THERMIQUE ET CHIMIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.04.2012 EP 12166035**

(43) Veröffentlichungstag der Anmeldung:
**04.03.2015 Patentblatt 2015/10**

(73) Patentinhaber: **Covestro Deutschland AG**
**51373 Leverkusen (DE)**

(72) Erfinder:
- **ECKEL, Thomas**
**41540 Dormagen (DE)**
- **SEIDEL, Andreas**
**41542 Dormagen (DE)**
- **HÄUßLER, Martin**
**42859 Remscheid (DE)**
- **THUERMER, Burkhard**
**53332 Bornheim (DE)**

(74) Vertreter: **Levpat**
**c/o Covestro AG**
**Gebäude 4825**
**51365 Leverkusen (DE)**

(56) Entgegenhaltungen:
**EP-A1- 0 983 315** **EP-A1- 1 003 809**
**JP-A- 2002 348 458**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 841 501 B1

Printed by Jouve, 75001 PARIS (FR)

## Beschreibung

Die vorliegende Erfindung betrifft Formmassen aus Polycarbonaten und Pfropfpolymerisaten sowie gegebenenfalls weiteren Additiven und Komponenten, die neben einer hohen Chemikalienbeständigkeit eine gute thermische Beständigkeit, insbesondere eine geringe Neigung zur Vergilbung und eine geringe Abbauneigung bei thermischer Belastung, aufweisen.

In einer besonderen, flammgeschützten Ausführungsform ist ferner die Nachbrennzeit bei einer UL94 Klassifizierung reduziert.

Thermoplastische Formmassen aus Polycarbonaten und ABS-Polymerisaten sind seit langem bekannt.

DE-A 1 170 141 beschreibt gut verarbeitbare Formmassen aus Polycarbonaten und Pfropfpolymerisaten von Monomermischungen aus Acrylnitril und einem aromatischen Vinylkohlenwasserstoff auf Polybutadien.

In der DE-A 1 810 993 wird die verbesserte Wärmestandfestigkeit von Polycarbonat in Abmischung mit ABS-Pfropfpolymerisaten bzw. Copolymerisaten auf Basis von $\alpha$-Methylstyrol beschrieben.

Gegenstand der DE-A 22 59 565 und DE-A 23 29 548 ist die verbesserte Fließnahtfestigkeit von PC/ABS-Formmassen, wobei in beiden Dokumenten als Bestandteil der ABS-Komponente jeweils Pfropfpolymerisate bestimmter Teilchengröße verwendet werden.

DE-A 28 18 679 beschreibt PC/ABS-Mischungen mit besonders hoher Tieftemperaturzähigkeit, wenn das ABS-Polymerisat zwei Pfropfmischpolymerisate mit unterschiedlichem Pfropfgrad enthält.

Die EP-A 900 827 offenbart schlagzähmodifzierte Polycarbonat-Zusammensetzungen mit verbesserter Thermostabilität enthaltend Emulsionspolymerisate, welche im wesentlichen frei von jeglichen basischen Komponenten sind, die das Polycarbonat abbauen. Gemäß dieser Anmeldung zeigen solche Polycarbonat-Zusammensetzungen, die mit Emulsionspolymerisaten schlagzähmodifiziert sind, die herstellungsbedingt basische Verunreinigungen enthalten, eine mangelhafte Thermostabilität.

EP 0 363 608 werden Polymermischungen aus aromatischem Polycarbonat, styrolhaltigen Copolymer oder Pfropfcopolymer sowie oligomeren Phosphaten als Flammschutzadditive beschrieben.

In der EP 0 704 488 werden Formmassen aus aromatischem Polycarbonat, styrolhaltigen Copolymerisaten und Pfropfpolymerisaten mit einer spezielllen Pfropfbasis in bestimmten Mengenverhältnissen beschrieben. Diese Frommassen können gegebenenfalls mit Phosphorverbindungen flammwidrig ausgerüstet werden.

EP 747 424 beschreibt thermoplastische Harze, die Phosphatverbindungen mit einem Molekulargewicht von 500 bis 2000 und Phosphatverbindungen mit einem Molekulargewicht von 2300 bis 11000 als Flammschutzmittel enthalten, wobei eine Vielzahl von thermoplastischen Harzen aufgezählt werden. Durch die hohen Molekulargewichte der Phosphorverbindungen wird das Fließverhalten der Formmassen deutlich beeinträchtigt.

In EP 1 003 809 werden PC/ABS-Formmassen beschrieben, die oligomere Phosphorverbindungen und Pfropfpolymerisate aus einer Pfropfgrundlage mit einer bestimmten Teilchengröße enthalten. Diese Formmassen zeichnen sich durch gute mechanische Eigenschaften, inbesondere auch unter erhöhter Elastizitätsbeanspruchung aus.

EP 0 983 315 beschreibt Formmassen aus aromatischem Polycarbonat, Pfropfpolymerisat und einer Flammschutzmittel-Kombination aus einer monomeren und einer oligomeren Phosphorverbindung. Diese Formmassen besitzen eine hohe Wärmeformbeständigkeit und exzellente mechanische Eigenschaften (Kerbschlagzähigkeit und Bindenahtfestigkeit).

Die JP 2002 348458 A offenbart thermoplastische Formmassen enthaltend Polycarbonat und ABS.

In keinem der oben genannten Dokumente wird der Einfluß des Gehalts an freiem, d.h. chemisch nicht gebundenem, Bisphenol-A auf die thermische Stabilität oder die Vergilbungstendenz der Polycarbonat-Formmassen beschrieben, ebensowenig wie die Kombination dieser Eigenschaften mit einer verbesserten chemischen Beständigkeit.

Aufgabe der vorliegenden Erfindung war es somit, Polycarbonat-Formmassen bereitzustellen, die neben einer hohen Chemikalienbeständigkeit eine gute thermische Beständigkeit, insbesondere eine geringe Neigung zur Vergilbung und eine geringe Abbauneigung bei thermischer Belastung, aufweisen.

Eine weitere Aufgabe der vorliegenden Erfindung war es, bei flammgeschützten Ausführungsformen die oben genannten Eigenschaften zu erzielen und die Nachbrennzeit bei einer UL94 Klassifizierung zu reduzieren.

Überraschenderweise wurde nun gefunden, dass die o. g. Eigenschaften erhalten werden, wenn der Gehalt an monomeren, d.h. nicht im Polymer chemisch gebundenem Bisphenol-A (BPA) in der Polycarbonat-Formmasse 70 ppm, bezogen auf die gesamte Formmasse, nicht übersteigt.

Freies, d.h. chemisch nicht gebundenes, BPA kann beispielsweise als Verunreinigung in BPA-basierten Polycarbonat oder als Verunreinigung in BPA-basierten Flammschutzmitteln in die Zusammensetzungen eingetragen werden, oder aber auch während einer thermischen Beanspruchung der zuvorgenannten Komponenten entstehen.

Die so zusammengesetzten Formmassen zeichnen sich durch eine hohe Chemikalienbeständigkeit, eine gute thermische Beständigkeit, insbesondere eine geringe Neigung zur Vergilbung und eine geringe Abbauneigung bei thermischer Belastung, sowie in flammgeschützter Ausführungsform eine verringerte Nachbrennzeit aus.

Gegenstand der Erfindung sind thermoplastische Formmassen enthaltend

A) 51,0 bis 99,5 Gew.-Teile, vorzugsweise 61,0 bis 96,5 Gew.-Teile, besonders bevorzugt 71,0 bis 86,0 Gew.-Teile mindestens eines aromatischen Polycarbonats mit einer OH-Endgruppenkonzentration von kleiner als 200 ppm,
B) 0,5 bis 49,0 Gew.-Teile, vorzugsweise 1,0 bis 39,0 Gew.-Teile, besonders bevorzugt 2,0 bis 29,0 Gew.-Teile mindestens eines basisch gefällten oder basisch verunreinigten Pfropfpolymerisats,
C) 0,0 - 30,0 Gew.-Teile, bevorzugt 1,0 - 20,0 Gew.-Teile, besonders bevorzugt 3,0 - 15,0 Gew.-Teile Vinyl(Co)Polymerisat und/oder Polyalkylenterephthalat,
D) 0,0 - 20,0 Gew.-Teile, bevorzugt 1,0 - 18,0 Gew.-Teile, besonders bevorzugt 8,0 - 15,0 Gew.-Teile, mindestens eines phosphorhaltigen Flammschutzmittels,
E) 0,0 - 40,0 Gew.-Teile, bevorzugt 0,5 - 10,0 Gew.-Teile, besonders bevorzugt 1,0 - 6,0 Gew.-Teile weitere übliche Additive,

wobei die Summe der Gewichtsteile der Komponenten A) bis E) sich zu 100 Gewichtsteilen addiert, und
wobei der Gehalt an freiem Bisphenol-A in der Gesamtzusammensetzung kleiner als 70 ppm, vorzugsweise kleiner als 50 ppm, weiter bevorzugt kleiner als 30 ppm, und
größer als 0,5 ppm, weiter bevorzugt > 1,0 ppm, besonders bevorzugt > 2 ppm, ist, und wobei kein phosphorhaltiges Flammschutzmittel enthalten ist.

Zur Bestimmung des Gehalts an freiem Bisphenol-A wird die Probe in Dichlormethan gelöst und mit Methanol umgefällt. Der ausgefallene Polymeranteil wird abfiltriert und die Filtratlösung eingeengt. Der Gehalt an freiem BPA wird in der eingeengten Filtratlösung durch HPLC mit UV-Detektion (externer Standard) bestimmt.

Besonders bevorzugte Formmassen enthalten als Komponente E) neben optionalen weiteren Additiven ein Entformungsmittel, z.B. Pentaerythrittetrastearat, in 0,1 bis 1,5 Gew.-Teilen, vorzugsweise 0,2 bis 1,0 Gew.-Teilen, besonders bevorzugt 0,3 bis 0,8 Gew.-Teilen.

Besonders bevorzugte Formmassen enthalten als Komponente E) neben optionalen weiteren Additiven mindestens einen Stabilisator, beispielsweise ausgewählt aus der Gruppe der sterisch gehinderten Phenole, Phosphite sowie Mischungen daraus und besonders bevorzugt Irganox® B900, in 0,01 bis 0,5 Gew.-Teilen, vorzugsweise 0,03 bis 0,4 Gew.-Teilen, besonders bevorzugt 0,06 bis 0,3 Gew.-Teilen.

Besonders bevorzugte flammgeschützte Formmassen enthalten als Komponente E) neben optionalen weiteren Additiven ein fluoriertes Polyolefin in 0,05 bis 5,0 Gew.-Teilen, vorzugsweise 0,1 bis 2,0 Gew.-Teilen, besonders bevorzugt 0,3 bis 1,0 Gew.-Teilen.

Weiterhin ist die Kombination der drei zuvorgenannten Additive PTFE, Pentaerythrittetrastearat und Irganox B900, als Komponente E besonders bevorzugt.

Komponente A

Erfindungsgemäß geeignete aromatische Polycarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate, z. B. DE-A 3 007 934).

Die Herstellung aromatischer Polycarbonate erfolgt z. B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen. Ebenso ist eine Herstellung über ein Schmelzepolymerisationsverfahren durch Umsetzung von Diphenolen mit beispielsweise Diphenylcarbonat möglich.

Im Phasengrenzflächenverfahren hergestellte Polycarbonate werden erfindungsgemäß bevorzugt. Weiter bevorzugt weisen die erfindungsgemäßen Polycarbonate eine OH-Endgruppenkonzentration kleiner als 300 ppm, besonders bevorzugt kleiner als 250 ppm, ganz bevorzugt kleiner als 200 ppm auf.

Die Bestimmung der OH-Endgruppenkonzentration erfolgt mittels Infrarotspektroskopie wie in Horbach, A.; Veiel, U.; Wunderlich, H., Makromolekulare Chemie 1965, Band 88, S. 215-231 beschrieben.

Diphenole zur Herstellung der aromatischen Polycarbonate und/oder aromatischen Polyestercarbonate sind vorzugsweise solche der Formel (I)

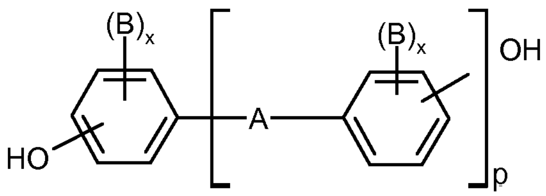

(I),

wobei

A eine Einfachbindung, $C_1$ bis Cs-Alkylen, $C_2$ bis Cs-Alkyliden, $C_5$ bis $C_6$-Cycloalkyliden,-O-, -SO-, -CO-, -S-, $-SO_2-$, $C_6$ bis $C_{12}$-Arylen, an das weitere aromatische gegebenenfalls Heteroatome enthaltende Ringe kondensiert sein können,
oder ein Rest der Formel (II) oder (III)

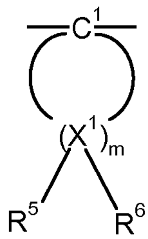

(II)

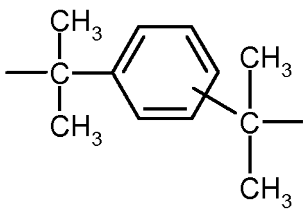

(III)

B jeweils $C_1$ bis $C_{12}$-Alkyl, vorzugsweise Methyl, Halogen, vorzugsweise Chlor und/oder Brom

x jeweils unabhängig voneinander 0, 1 oder 2,

p 1 oder 0 sind, und

$R^5$ und $R^6$ für jedes $X^1$ individuell wählbar, unabhängig voneinander Wasserstoff oder $C_1$ bis $C_6$-Alkyl, vorzugsweise Wasserstoff, Methyl oder Ethyl,

X1 Kohlenstoff und

m eine ganze Zahl von 4 bis 7, bevorzugt 4 oder 5 bedeuten, mit der Maßgabe, dass an mindestens einem Atom $X^1$, $R^5$ und $R^6$ gleichzeitig Alkyl, vorzugsweise Methyl oder Ethyl, sind.

Bevorzugte Diphenole sind Hydrochinon, Resorcin, Dihydroxydiphenole, Bis-(hydroxyphenyl)-$C_1$-$C_5$-alkane, Bis-(hydroxyphenyl)-$C_5$-$C_6$-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und $\alpha,\alpha$-Bis-(hydroxyphenyl)-diisopropyl-benzole sowie deren kernbromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenylsulfon sowie deren di- und tetrabromierten oder -chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan. Insbesondere bevorzugt ist 2,2-Bis-(4-hydroxyphenyl)-propan (Bisphenol-A).

Es können die Diphenole einzeln oder als beliebige Mischungen eingesetzt werden. Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-[2-(2,4,4-Trimethylpentyl)]-phenol, 4-(1,3-Tetramethylbutyl)-phenol gemäß DE-A 2 842 005 oder Monoalkylphenole oder Dialkylphenole mit insgesamt 8 bis 20 Kohlenstoffatomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol%, und 10 Mol%, bezogen auf die Molsumme der jeweils eingesetzten Diphenole.

Die thermoplastischen, aromatischen Polycarbonate haben bevorzugt mittlere Gewichtsmittelmolekulargewichte ($M_w$, gemessen durch GPC (Gelpermeationschromatographie mit Polycarbonatstandard) von 10.000 bis 200.000 g/mol, vorzugsweise 15.000 bis 80.000 g/mol, weiter bevorzgut von 23.000 bis 32.000 besonders bevorzugt 26.000 bis 32.000 g/mol.

Die thermoplastischen, aromatischen Polycarbonate können in bekannter Weise verzweigt sein, und zwar vorzugsweise durch den Einbau von 0,05 bis 2,0 Mol%, bezogen auf die Summe der eingesetzten Diphenole, an dreifunktionellen oder mehr als dreifunktionellen Verbindungen, beispielsweise solchen mit drei und mehr phenolischen Gruppen. Bevorzugt werden lineare Polycarbonate, weiter bevorzugt auf Basis von Bisphenol-A, eingesetzt.

Geeignet sind sowohl Homopolycarbonate als auch Copolycarbonate. Zur Herstellung erfindungsgemäßer Copolycarbonate gemäß Komponente A können auch 1 bis 25 Gew.%, vorzugsweise 2,5 bis 25 Gew.%, bezogen auf die Gesamtmenge an einzusetzenden Diphenolen, Polydiorganosiloxane mit Hydroxyaryloxy-Endgruppen eingesetzt werden. Diese sind bekannt (US 3 419 634) und nach literaturbekannten Verfahren herstellbar. Ebenfalls geeignet sind Polydiorganosiloxanhaltige Copolycarbonate; die Herstellung der Polydiorganosiloxanhaltiger Copolycarbonate ist beispielsweise in der DE-A 3 334 782 beschrieben.

Bevorzugte Polycarbonate sind neben den Bisphenol-A-Homopolycarbonaten die Copolycarbonate von Bisphenol-A mit bis zu 15 Mol%, bezogen auf die Molsummen an Diphenolen, anderen als bevorzugt oder besonders bevorzugt genannten Diphenolen.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen, als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch $C_1$ bis $C_{22}$-Alkylgruppen oder durch Halogenatome substituiert sein können, sowie aliphatische $C_2$ bis $C_{22}$-Monocarbonsäurechloride in Betracht.

Die Menge an Kettenabbrechern beträgt jeweils 0,1 bis 10 Mol%, bezogen im Falle der phenolischen Kettenabbrecher auf Mol Diphenol und im Falle von Monocarbonsäurechlorid-Kettenabbrecher auf Mol Dicarbonsäuredichlorid.

Komponente B

Die Pfropfpolymerisate B umfassen z.B. Pfropfpolymerisate mit kautschukelastischen Eigenschaften, die im wesentlichen aus mindestens 2 der folgenden Monomeren erhältlich sind: Chloropren, Butadien-1,3, Isopren, Styrol, Acrylnitril, Ethylen, Propylen, Vinylacetat und (Meth-)Acrylsäureester mit 1 bis 18 C-Atomen in der Alkoholkomponente; also Polymerisate, wie sie z.B. in "Methoden der Organischen Chemie" (Houben-Weyl), Bd. 14/1, Georg Thieme-Verlag, Stuttgart 1961, S. 393-406 und in C.B. Bucknall, "Toughened Plastics", Appl. Science Publishers, London 1977, beschrieben sind.

Erfindungsgemäß wird ein basisch gefälltes oder basisch verunreinigtes Pfropfpolymerisat eingesetzt.

Bevorzugte Polymerisate B sind partiell vernetzt und besitzen Gelgehalte (gemessen in Toluol) von über 20 Gew.-%, vorzugsweise über 40 Gew.-%, insbesondere über 60 Gew.-%.

Der Gelgehalt wird bei 25°C in einem geeigneten Lösungsmittel bestimmt (M. Hoffmann, H. Krömer, R. Kuhn, Polymeranalytik I und II, Georg Thieme-Verlag, Stuttgart 1977).

Bevorzugte Pfropfpolymerisate B umfassen Pfropfpolymerisate aus:

B.1) 5 bis 95, vorzugsweise 30 bis 80 Gew.-Teilen, einer Mischung aus

B.1.1) 50 bis 95 Gew.-Teilen Styrol, $\alpha$-Methylstyrol, methylkernsubstituiertem Styrol, $C_1$-$C_8$-Alkylmethacrylat,

insbesondere Methylmethacrylat, $C_1$-$C_8$-Alkylacrylat, insbesondere Methylacrylat, oder Mischungen dieser Verbindungen und

B.1.2) 5 b is 50 Gew.-Teilen Acrylnitril, Methacrylnitril $C_1$-$C_8$-Alkylmethacrylaten, insbesondere Methylmethacrylat, $C_1$-$C_8$-Alkylacrylat, insbesondere Methylacrylat, Maleinsäureanhydrid, $C_1$-$C_4$-alkyl- bzw. -phenyl-N-substituierte Maleinimide oder Mischungen dieser Verbindungen auf

B.2) 5 bis 95, vorzugsweise 20 bis 70 Gew.-Teilen einer kautschukhaltigen Pfropfgrundlage.

Vorzugsweise hat die Pfropfgrundlage eine Glasübergangstemperatur unter -10°C.

Glasübergangstemperaturen werden, soweit in der vorliegenden Erfindung nicht anders angegeben, mittels dynamischer Differenzkalorimetrie (DSC) gemäß der Norm DIN EN 61006 bei einer Heizrate von 10 K/min mit Definition der Tg als Mittelpunkttemperatur (Tangentenmethode) und Stickstoff als Schutzgas bestimmt.

Besonders bevorzugt ist eine Pfropfgrundlage auf Basis eines Polybutadienkautschuks.

Bevorzugte Pfropfpolymerisate B sind z.B. mit Styrol und/oder Acrylnitril und/oder (Meth-)Acrylsäurealkylestern gepfropfte Polybutadiene, Butadien/Styrol-Copolymerisate und Acrylatkautschuke; d.h. Copolymerisate der in der DE-OS 1 694 173 (= US-PS 3 564 077) beschriebenen Art; mit Acryl- oder Methacrylsäurealkylestern, Vinylacetat, Acrylnitril, Styrol und/oder Alkylstyrolen gepfropfte Polybutadiene, Butadien/Styrol- oder Butadien/Acrylnitril-Copolymerisate, Polyisobutene oder Polyisoprene, wie sie z.B. in der DE-OS 2 348 377 (= US-PS 3 919 353) beschrieben sind.

Besonders bevorzuge Pfropfpolymerisate B sind Pfropfpolymerisate, die durch Pfropfreaktion von

I. 10 bis 70, vorzugsweise 15 bis 50, insbesondere 20 bis 40 Gew.-%, bezogen auf Pfropfprodukt, mindestens eines (Meth-)Acrylsäureesters oder 10 bis 70, vorzugsweise 15 bis 50, insbesondere 20 bis 40 Gew.-% eines Gemisches aus 10 bis 50, vorzugsweise 20 bis 35 Gew.-%, bezogen auf Gemisch, Acrylnitril oder (Meth-)Acrylsäureester und 50 bis 90, vorzugsweise 65 bis 80 Gew.-%, bezogen auf Gemisch, Styrol auf

II. 30 bis 90, vorzugsweise 40 bis 85, insbesondere 50 bis 80 Gew.-%, bezogen auf Pfropfprodukt, eines Butadien-Polymerisats mit mindestens 50 Gew.-%, bezogen auf II, Butadienresten als Pfropfgrundlage.

erhältlich sind.

Der Gelanteil dieser Pfropfgrundlage II beträgt vorzugsweise mindestens 70 Gew.-% (in Toluol gemessen), der Pfropfgrad G 0,15 bis 0,55 und der mittlere Teilchendurchmesser $d_{50}$ des Pfropfpolymerisats B 0,05 bis 2, vorzugsweise 0,1 bis 0,6 $\mu$m.

(Meth-)Acrylsäureester I sind Ester der Acrylsäure oder Methacrylsäure und einwertiger Alkohole mit 1 bis 18 C-Atomen. Besonders bevorzugt sind Methacrylsäuremethylester, -ethylester und -propylester.

Die Pfropfgrundlage II kann neben Butadienresten bis zu 50 Gew.-%, bezogen auf II, Reste anderer ethylenisch ungesättigter Monomerer, wie Styrol, Acrylnitril, Ester der Acryl- oder Methacrylsäure mit 1 bis 4 C-Atomen in der Alkoholkomponente (wie Methylacrylat, Ethylacrylat, Methylmethacrylat, Ethylmethacrylat), Vinylester und/oder Vinylether enthalten. Die bevorzugte Pfropfgrundlage II besteht aus reinem Polybutadien.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten B auch solche Produkte verstanden, die durch Polymerisation der Pfropfmonomeren in Gegenwart der Pfropfgrundlage gewonnen werden.

Der Pfropfgrad G bezeichnet das Gewichtsverhältnis von aufgepfropften Pfropfmonomeren zur Pfropfgrundlage und ist dimensionslos.

Die mittlere Teilchengröße $d_{50}$ ist der Durchmesser, oberhalb und unterhalb dessen jeweils 50 Gew.-% der Teilchen liegen. Er kann mittels Ultrazentrifugenmessungen (W. Scholtan, H. Lange, Kolloid, Z. und Z. Polymere 250 (1972), 782-796) bestimmt werden.

Weitere bevorzugte Pfropfpolymerisate B sind z.B. auch Pfropfpolymerisate aus

(a) 20 bis 90 Gew.-%, bezogen auf B, Acrylatkautschuk als Pfropfgrundlage und
(b) 10 bis 80 Gew.-%, bezogen auf B, mindestens eines polymerisierbaren, ethylenisch ungesättigten Monomeren, dessen bzw. deren in Abwesenheit von a) entstandenen Homo- bzw. Copolymerisate eine Glasübergangstemperatur über 25°C hätten, als Pfropfmonomere.

Die Pfropfgrundlage aus Acrylatkautschukt hat bevorzugt eine Glasübergangstemperatur von kleiner als -20°C, vorzugsweise kleiner -30°C.

Die Acrylatkautschuke (a) der Polymerisate B sind vorzugsweise Polymerisate aus Acrylsäurealkylestern, gegebenenfalls mit bis zu 40 Gew.-%, bezogen auf (a), anderer polymerisierbarer, ethylenisch ungesättigter Monomerer.

Zu den bevorzugten polymerisierbaren Acrylsäureestern gehören $C_1$-$C_8$-Alkylester, beispielsweise Methyl-, Ethyl-, n-Butyl-, n-Octyl- und 2-Ethylhexylester sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen, wie z.B. Trivinyl- und Triallylcyanurat; polyfunktionelle Vinylverbindungen, wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomeren Triallylcyanurat, Triallylisocyanurat, Trivinylcyanurat, Triacryloylhexahydro-s-triazin, Triallylbenzole.

Die Menge der vernetzenden Monomeren beträgt vorzugsweise 0,02 bis 5, insbesondere 0,05 bis 2 Gew.-%, bezogen auf Pfropfgrundlage (a).

Bei cyclischen vernetzenden Monomeren mit mindestens 3 ethylenisch ungesättigten Gruppen ist es vorteilhaft, die Menge auf unter 1 Gew.-% der Pfropfgrundlage (a) zu beschränken.

Bevorzugte "andere" polymerisierbare, ethylenisch ungesättigte Monomere, die neben den Acrylsäureestern gegebenenfalls zur Herstellung der Pfropfgrundlage (a) dienen können, sind z.B. Acrylnitril, Styrol, α-Methylstyrol, Acrylamide, Vinyl-$C_1$-$C_6$-alkylether, Methylmethacrylat, Butadien. Bevorzugte Acrylatkautschuke als Pfropfgrundlage (a) sind Emulsionspolymerisate, die einen Gelgehalt von mindestens 60 Gew.-% aufweisen.

Weitere geeignete Pfropfgrundlagen sind Silikonkautschuke mit pfropfaktiven Stellen und einem Gelgehalt von mindestens 40 % (gemessen in Dimethylformamid), wie sie in den Offenlegungsschriften DE 37 04 657, DE 37 04 655, DE 36 31 540 und DE 36 31 539 beschrieben werden sowie Silikon-Acrylat-Kompositkautschuke.

Komponente C

Die Komponente C umfasst ein oder mehrere thermoplastische Vinyl(Co)Polymerisate C.1 und/oder Polyalkylenterephthalate C.2.

Geeignet sind als Vinyl(Co)Polymerisate C.1 Polymerisate von mindestens einem Monomeren aus der Gruppe der Vinylaromaten, Vinylcyanide (ungesättigte Nitrile), (Meth)Acrylsäure-($C_1$-$C_8$)-Alkylester, ungesättigte Carbonsäuren sowie Derivate (wie Anhydride und Imide) ungesättigter Carbonsäuren. Insbesondere geeignet sind (Co)Polymerisate aus

C.1.1 50 bis 99, vorzugsweise 60 bis 80 Gew.-Teilen Vinylaromaten und/oder kernsubstituierten Vinylaromaten wie Styrol, α-Methylstyrol, p-Methylstyrol, p-Chlorstyrol) und/oder (Meth)Acrylsäure-($C_1$-$C_8$)-Alkylester, wie Methylmethacrylat, Ethylmethacrylat), und

C.1.2 1 bis 50, vorzugsweise 20 bis 40 Gew.-Teilen Vinylcyanide (ungesättigte Nitrile) wie Acryl-nitril und Methacrylnitril und/oder (Meth)Acryl-säure-($C_1$-$C_8$)-Alkylester, wie Methylmeth-acrylat, n-Butylacrylat, t-Butylacrylat, und/oder ungesättigte Carbonsäuren, wie Maleinsäure, und/oder Derivate, wie Anhydride und Imide, ungesättigter Carbonsäuren, beispielsweise Maleinsäureanhydrid und N-Phenylmaleinimid).

Die Vinyl(co)polymerisate C.1 sind harzartig, thermoplastisch und kautschukfrei. Besonders bevorzugt ist das Copolymerisat aus C.1.1 Styrol und C.1.2 Acrylnitril.

Die (Co)Polymerisate gemäß C.1 sind bekannt und lassen sich durch radikalische Polymerisation, insbesondere durch Emulsions-, Suspensions-, Lösungs- oder Massepolymerisation herstellen. Die (Co)Polymerisate besitzen vorzugsweise mittlere Molekulargewichte Mw (Gewichtsmittel, ermittelt durch Lichtstreuung oder Sedimentation) zwischen 15.000 und 200.000.

Die Polyalkylenterephthalate der Komponente C.2 sind Reaktionsprodukte aus aromatischen Dicarbonsäuren oder ihren reaktionsfähigen Derivaten, wie Dimethylestern oder Anhydriden, und aliphatischen, cycloaliphatischen oder araliphatischen Diolen sowie Mischungen dieser Reaktionsprodukte.

Bevorzugte Polyalkylenterephthalate enthalten mindestens 80 Gew.-%, vorzugsweise mindestens 90 Gew.-%, bezogen auf die Dicarbonsäurekomponente Terephthalsäurereste und mindestens 80 Gew.-%, vorzugsweise mindestens 90 Mol-%, bezogen auf die Diolkomponente Ethylenglykol- und/oder Butandiol-1,4-Reste.

Die bevorzugten Polyalkylenterephthalate können neben Terephthalsäureresten bis zu 20 Mol-%, vorzugsweise bis zu 10 Mol-%, Reste anderer aromatischer oder cycloaliphatischer Dicarbonsäuren mit 8 bis 14 C-Atomen oder aliphatischer Dicarbonsäuren mit 4 bis 12 C-Atomen enthalten, wie z.B. Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexandiessigsäure.

Die bevorzugten Polyalkylenterephthalate können neben Ethylenglykol- bzw. Butandiol-1,4-Resten bis zu 20 Mol-%, vorzugsweise bis zu 10 Mol-%, andere aliphatische Diole mit 3 bis 12 C-Atomen oder cycloaliphatische Diole mit 6 bis 21 C-Atomen enthalten, z.B. Reste von Propandiol-1,3, 2-Ethylpropandiol-1,3, Neopentylglykol, Pentandiol-1,5, Hexandiol-1,6, Cyclohexan-dimethanol-1,4, 3-Ethylpentandiol-2,4, 2-Methylpentandiol-2,4, 2,2,4-Trimethylpentandiol-1,3, 2-Ethylhexandiol-1,3, 2,2-Diethylpropandiol-1,3, Hexandiol-2,5, 1,4-Di-(ß-hydroxyethoxy)-benzol, 2,2-Bis-(4-hydroxycyclohexyl)-propan, 2,4-Dihydroxy-1,1,3,3-tetramethyl-cyclobutan, 2,2-Bis-(4-ß-hydroxyethoxy-phenyl)-propan und 2,2-Bis-(4-hydroxypropoxyphenyl)-propan (DE-A 2 407 674, 2 407 776, 2 715 932).

Die Polyalkylenterephthalate können durch Einbau relativ kleiner Mengen 3- oder 4-wertiger Alkohole oder 3- oder 4-basischer Carbonsäuren, z.B. gemäß DE-A 1 900 270 und US-PS 3 692 744, verzweigt werden. Beispiele bevorzugter Verzweigungsmittel sind Trimesinsäure, Trimellithsäure, Trimethylolethan und -propan und Pentaerythrit.

Besonders bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind, und Mischungen dieser Polyalkylenterephthalate.

Mischungen von Polyalkylenterephthalaten enthalten 1 bis 50 Gew.-%, vorzugsweise 1 bis 30 Gew.-%, Polyethylenterephthalat und 50 bis 99 Gew.-%, vorzugsweise 70 bis 99 Gew.-%, Polybutylenterephthalat.

Die vorzugsweise verwendeten Polyalkylenterephthalate besitzen im allgemeinen eine Grenzviskosität von 0,4 bis 1,5 dl/g, vorzugsweise 0,5 bis 1,2 dl/g, gemessen in Phenol/o-Dichlorbenzol (1:1 Gewichtsteile) bei 25°C im Ubbelohde-Viskosimeter.

Die Polyalkylenterephthalate lassen sich nach bekannten Methoden herstellen (s. z.B. Kunststoff-Handbuch, Band VIII, S. 695 ff., Carl-Hanser-Verlag, München 1973).

<u>Kompenente E</u>

Die Zusammensetzung kann weitere übliche Polymeradditive wie Flammschutzsynergisten, Antidrippingmittel (beispielsweise Verbindungen der Substanzklassen der fluorierten Polyolefine, der Silikone sowie Aramidfasern), Gleit- und Entformungsmittel (beispielsweise Pentaerythrittetrastearat), Nukleiermittel, Stabilisatoren, Antistatika (beispielsweise Leitruße, Carbonfasern, Carbon Nanotubes sowie organische Antistatika wie Polyalkylenether, Alkyl Sulfonate oder Polyamid-haltige Polymere) sowie Farbstoffe und Pigmente enthalten.

Insbesondere wird als Antidrippingmittel Polytetrafluorethylen (PTFE) oder PTFE-haltige Zusammensetzungen wie beispielsweise Masterbatche von PTFE mit styrol- oder methylmethacrylat enthaltenden Polymeren oder Copolymeren, als Pulver oder als koagulierte Mischung, z.B. mit Komponente B oder C, eingesetzt.

Die als Antidrippingmittel eingesetzten fluorierten Polyolefine sind hochmolekular und besitzen Glasübergangstemperaturen von über -30°C, in der Regel von über 100°C, Fluorgehalte, vorzugsweise von 65 bis 76, insbesondere von 70 bis 76 Gew.-%, mittlere Teilchendurchmesser $d_{50}$ von 0,05 bis 1000, vorzugsweise 0,08 bis 20 $\mu$m. Im allgemeinen haben die fluorierten Polyolefine eine Dichte von 1,2 bis 2,3 g/cm$^3$. Bevorzugte fluorierte Polyolefine sind Polytetrafluorethylen, Polyvinylidenfluorid, Tetrafluorethylen/Hexafluorpropylen- und Ethylen/Tetrafluorethylen-Copolymerisate. Die fluorierten Polyolefine sind bekannt (vgl. "Vinyl and Related Polymers" von Schildknecht, John Wiley & Sons, Inc., New York, 1962, Seite 484-494; "Fluorpolymers" von Wall, Wiley-Interscience, John Wiley & Sons, Inc., New York, Band 13, 1970, Seite 623-654; "Modern Plastics Encyclopedia", 1970-1971, Band 47, No. 10 A, Oktober 1970, Mc Graw-Hill, Inc., New York, Seite 134 und 774; "Modern Plastics Encyclopedia", 1975-1976, Oktober 1975, Band 52, Nr. 10 A, Mc Graw-Hill, Inc., New York, Seite 27, 28 und 472 und US-PS 3 671 487, 3 723 373 und 3 838 092).

Geeignete, in Pulverform einsetzbare fluorierte Polyolefine E sind Tetrafluorethylenpolymerisate mit mittleren Teilchendurchmesser von 100 bis 1000 $\mu$m und Dichten von 2,0 g/cm$^3$ bis 2,3 g/cm$^3$. Geeignete Tetrafluorethylenpolymerisat-Pulver sind handelsübliche Produkte und werden beispielsweise von der Fa. DuPont unter dem Handelsnamen Teflon® angeboten.

Als Stabilisatoren gemäß Komponente E werden bevorzugt sterisch gehinderte Phenole und Phosphite oder deren Gemische, wie beispielsweise Irganox© B900 (BASF), verwendet. Pentaerythrittetrastearat wird bevorzugt als Entformungsmittel verwendet.

In einer weiter bevorzugten Ausführungsform werden als Additive sterisch gehinderte Phenole und Phosphite oder deren Gemische, Entformungsmittel und Pigmente, vorzugsweise Ruß oder Titandioxid, eingesetzt.

Die Komponente E umfaßt auch verstärkende und nicht verstärkende Füllstoffe. Beispiele für verstärkende Füllstoffe sind Glaskugeln, Glimmer, Silikate, Quarz, Talkum, Titandioxid, Wollastonit, sowie pyrogene oder gefällte Kieselsäuren mit BET-Oberflächen von mindestens 50 m$^2$/g (nach DIN 66131/2). Besonders bevorzugt ist Talk als Füllstoff.

In einer alternativen Ausführungsform können feinstteilige anorganische Pulver zum Einsatz kommen.

Bevorzugt bestehen die feinstteiligen anorganischen Pulver aus Oxiden, Phosphaten, Hydroxiden, vorzugsweise aus $TiO_2$, $SiO_2$, $SnO_2$, ZnO, ZnS, Böhmit, $ZrO_2$, $Al_2O_3$, Aluminiumphosphate, Eisenoxide, ferner TiN, WC, AlO(OH),

$Sb_2O_3$, Eisenoxide, $NaSO_4$, Vanadiumoxide, Zinkborat, Silicate wie Al-Silikate, Mg-Silikate, ein-, zwei-, dreidimensionale Silikate. Mischungen und dotierte Verbindungen sind ebenfalls verwendbar.

Desweiteren können diese nanoskaligen Partikel mit organischen Molekülen oberflächenmodifiziert sein, um eine bessere Verträglichkeit mit den Polymeren zu erzielen. Auf diese Weise lassen sich hydrophobe oder hydrophile Oberflächen erzeugen. Besonders bevorzugt sind hydrathaltige Aluminiumoxide, z.B. Böhmit oder $TiO_2$.

Die durchschnittlichen Teilchendurchmesser der Nanopartikel sind kleiner gleich 200 nm, bevorzugt kleiner gleich 150 nm, insbesondere 1 bis 100 nm. Teilchengröße und Teilchendurchmesser bedeutet immer den mittleren Teilchendurchmesser $d_{50}$, ermittelt durch Ultrazentrifugenmessungen nach W. Scholtan et al., Kolloid-Z. und Z. Polymere 250 (1972), S. 782-796.

Die erfindungsgemäßen Formmassen, enthaltend die Komponenten A bis D und gegebenenfalls weiteren bekannten Zusätzen E wie Stabilisatoren, Farbstoffen, Pigmenten, Gleit- und Entformungsmitteln, Nukleiermittel sowie Antistatika, werden hergestellt, indem man die jeweiligen Bestandteile in bekannter Weise vermischt und bei Temperaturen von 200°C bis 330°C in üblichen Aggregaten wie Innenknetern, Extrudern und Doppelwellenschnecken schmelzcompoundiert oder schmelzextrudiert.

Gegenstand der vorliegenden Erfindung ist somit auch ein Verfahren zur Herstellung von thermoplastischen Formmassen, enthaltend die Komponenten A bis E, die nach erfolgter Vermischung bei Temperaturen von 200 bis 330°C in gebräuchlichen Aggregaten schmelzcompoundiert oder schmelzextrudiert werden.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Die Formmassen der vorliegenden Erfindung können zur Herstellung von Formkörpern jeder Art verwendet werden. Insbesondere können Formkörper durch Spritzguß hergestellt werden. Beispiele für herstellbare Formkörper sind: Gehäuseteile jeder Art, z.B. für Haushaltsgeräte, wie TV- und HiFi-Geräte, Kaffeemaschinen, Mixer, Büromaschinen, wie Monitore oder Drucker, oder Abdeckplatten für den Bausektor und Teile für den Kfz-Sektor. Sie werden außerdem auf dem Gebiet der Elektrotechnik eingesetzt, weil sie sehr gute elektrische Eigenschaften haben.

Besonders geeignet sind die Formmassen zur Herstellung von dünnwandigen Gehäuseteilen im Elektro- und Elektronikbereich.

Eine weitere Form der Verarbeitung ist die Herstellung von Formkörpern durch Blasformen oder durch Tiefziehen aus vorher hergestellten Platten oder Folien.

Herstellung und Prüfung der Formmassen

Auf einem Zweischneckenextruder (ZSK-25) (Fa. Werner und Pfleiderer) werden die in Tabelle 1 aufgeführten Einsatzstoffe bei einer Drehzahl von 225 Upm und einem Durchsatz von 20 kg/h bei einer Schmelzetemperatur gemessen am Düsenaustritt von 260°C compoundiert und granuliert. Die fertigen Granulate werden auf einer Spritzgussmaschine zu den entsprechenden Probekörpern verarbeitet (wenn in Tabellen 1 und 2 nicht anders vermerkt lag die Massetemperatur bei flammgeschützten Zusammensetzungen bei 240 °C bzw. bei nicht flammgeschützten Zusammensetzungen bei 260°C; Werkzeugtemperatur 80°C, Fließfrontgeschwindigkeit 240 mm/s).

Zur Charakterisierung der Eigenschaften der Probekörper wurden folgende Methoden angewandt: Die **Schmelzefließfähigkeit** (MVR) wird beurteilt anhand der Schmelzevolumenfließrate (MVR) gemessen gemäß ISO 1133 bei einer Temperatur von 240°C (flammgeschützt) bzw. 260 °C (nicht flammgeschützt) und mit einer Stempellast von 5 kg.

Das **Brandverhalten** wird nach UL 94V an Stäben der Abmessung 127 x 12,7 x 1,5 mm gemessen.

Das **ESC-Verhalten** wurde gemäß ISO 4599 (Environmental Stress Cracking (ESC)-Test) bei Raumtemperatur (23 °C) und bei 2,4% Randfaserdehnung in einer Handcreme (Sebamed® Hand+Nagelbalsam basierend auf Wasser, PPG-2 Myristyletherpropionat, hydrogenierte Kokosglyceride, Glycerin, Glycerylcocoate, hydrogeniertes Cocosöl, , Sorbitol, Panthenol und Ceteareth-25) gemessen.

Die **Wärmeformbeständigkeit** wurde gemessen gemäß DIN ISO 306 (Vicat-Erweichungstemperatur, Verfahren B mit 50 N Belastung und einer Heizrate von 120 K/h) an einem einseitig angespritzten Prüfstab der Dimension 80 mm x 10 mm x 4 mm.

Der **Yellownessindex (YI)** wird bestimmt an Farbmusterplatten (MPL) mit den Abmessungen 60 x 40 x 2 mm gemäß der ASTM-Norm E-313-96 (Lichtart: C, Beobachter: 2°, Messöffnung: Large Area Value) nach der Gleichung YI = (128X - 106Z)/Y, mit X,Y,Z = Farbkoordinaten gemäß DIN 5033. Die Farbmusterplatten wurden bei 310 °C für flammgeschützte Formmassen und 320 °C für nicht flammgeschützte Formmassen gespritzt.

Als Maß für die **Verarbeitungsstabilität** der so hergestellten Zusammensetzungen dient die Änderung (in Prozent) des MVR gemessen nach ISO 1133 bei 260°C für nicht flammgeschützte und bei 240°C für flammgeschützte PC/ABS-Zusammensetzungen mit einer Stempellast von 5kg bei einer 15-minütigen Verweilzeit der Schmelze unter Luftausschluss bei einer Temperatur von 300°C. Die resultierende Größe ΔMVR(proc.) berechnet sich durch nachstehende Formel.

$$\Delta MVR(proc.) = \frac{MVR(nach Schmelzelagerung) - MVR(vor Lagerung)}{MVR(vor Lagerung)} \bullet 100\%$$

Die folgenden Beispiele dienen der weiteren Erläuterung der Erfindung.

## Beispiele

### Komponente A-1

Lineares Polycarbonat auf Basis Bisphenol-A hergestellt im Phasengrenzflächenverfahren mit einem gewichtsgemittelten Molekulargewicht $\overline{M}_w$ von 27000 g/mol (bestimmt durch GPC in Dichlormethan mit Polycarbonat als Standard). Der BPA-Gehalt des eingesetzten Polycarbonat A-1 betrug 3 ppm. Diese niedrigen BPA-Gehalte werden dadurch erhalten, dass man übliches Polycarbonat auf einen Extruder bei Temperaturen oberhalb 300°C unter Anwendung von Vakuum entgast und damit das unter diesen Bedingungen flüchtige BPA ausdampft. Die Komponente A-1 weist einen OH-Endgruppengehalt von 150 ppm auf.

### Komponente A-2

Lineares Polycarbonat auf Basis Bisphenol-A hergestellt im Schmelzverfahren mit einem gewichtsgemittelten Molekulargewicht $\overline{M}_w$ von 27000 g/mol (bestimmt durch GPC in Dichlormethan mit Polycarbonat als Standard) (BPA-Gehalt 32 ppm). Die Komponente A-2 weist einen OH-Endgruppengehalt von 480 ppm auf.

### Komponente B-1

Sauer gefälltes ABS-Pfropfpolymerisat mit Kern-Schale-Struktur, hergestellt durch EmulsionsPolymerisation von 43 Gew.-% bezogen auf das ABS-Polymerisat einer Mischung aus 28 Gew.-% Acrylnitril und 72 Gew.-% Styrol in Gegenwart von 57 Gew.-% bezogen auf das ABS-Polymerisat eines teilchenförmig vernetzten Polybutadienkautschuks (mittlerer Teilchendurchmesser dso = 0,35 µm).

### Komponente B-2

Basisch gefälltes ABS-Pfropfpolymerisat mit Kern-Schale-Struktur, hergestellt durch EmulsionsPolymerisation von 50 Gew.-% bezogen auf das ABS-Polymerisat einer Mischung aus 23 Gew.-% Acrylnitril und 77 Gew.-% Styrol in Gegenwart von 50 Gew.-% bezogen auf das ABS-Polymerisat eines teilchenförmig vernetzten Polybutadienkautschuks (mittlerer Teilchendurchmesser dso = 0,25 µm).

### Komponente C

Copolymerisat aus 77 Gew.-% Styrol und 23 Gew.-% Acrylnitril mit einem gewichtsgemittelten Molekulargewicht Mw von 130000 g/mol (bestimmt durch GPC), hergestellt nach dem Masseverfahren.

### Komponente D

Bisphenol-A basierendes Oligophosphat

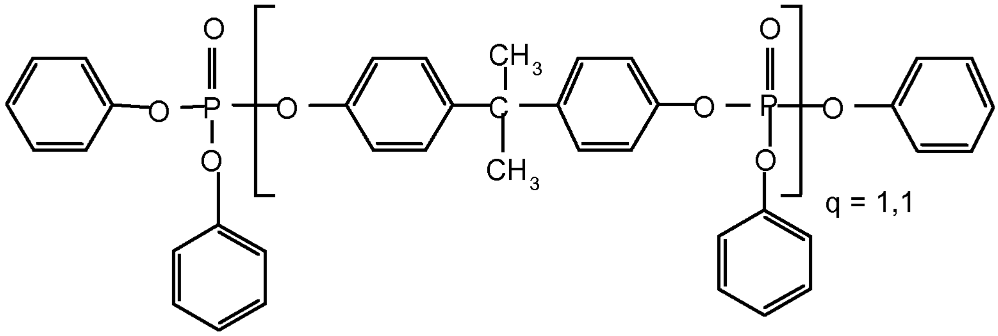

**Komponente E-1**

Koagulierte Mischung von Emulsionen fluorierter Polyolefine mit Emulsionen eines Copolymerisats auf Styrol-Acrylnitril-Basis (Cycolac INP 449 der Fa. Sabic).

**Komponente E-2**

Pentaerythrittetrastearat als Gleit-/Entformungsmittel

**Komponente E-3**

Phosphitstabilisator, Irganox® B900 (Gemisch aus 80% Irgafos® 168 und 20% Irganox® 1076; BASF AG; Ludwigshafen / Irgafos® 168 (Tris(2,4-di-tert-butyl-phenyl)-phosphit) / Irganox® 1076 (2,6-Di-tert-butyl-4-(octadecanoxycarbonylethyl)phenol)

**Komponente E-4**

Als zusätzlicher Stabilisator wird Pural 200 eingesetzt (feinstteiliges Aluminiumoxid-hydroxid (Fa. Condea, Hamburg, Deutschland) mit einer mittleren Teilchengröße des Materials von 50 nm).

**Tabelle 1:** Zusammensetzung und Eigenschaften der nicht flammgeschützten Formmassen (Bsp. 2 ist nicht erfindungsgemäß)

| **Komponenten (Gew.-Teile)** | Bsp. 1 | Bsp. 2 |
|---|---|---|
| A1 | 70,0 | |
| A2 | | 70,0 |
| B-2 | 15,0 | 15,0 |
| C | 15,0 | 15,0 |
| E-2 | 0,5 | 0,5 |
| E-3 | 0,1 | 0,1 |
| BPA-Gehalt gemessen [ppm] | 17 | 76 |
| **Eigenschaften** | | |
| Vicat B 120 | 130 | 129 |
| MVR 260°C/5kg [ccm/10 min] | 16,7 | 26,7 |
| MVR 260°C/5kg nach Thermo-Lagerung 300°C/15 min [ccm/10 min] | 38,7 | 96,5 |
| delta MVR nach Thermo-Lagerung 300°C/15 min [%] | 132 | 261 |
| ESC-Test (Handlotion), 2,4%, Zeit bis zum Bruch, 260°C [h] | 18,0 | 5,3 |
| Yellowness Index an MPL 320°C | 22,3 | 39,5 |

(fortgesetzt)

| Komponenten (Gew.-Teile) | Bsp. 1 | Bsp. 2 |
|---|---|---|
| A1 | 70,0 | |
| bis zum Bruch, 260°C [h] | 18,0 | 5,3 |
| Yellowness Index an MPL 320°C | 22,3 | 39,5 |

Aus Tabelle 1 ist ersichtlich, dass die erfindungsgemäße Zusammensetzung gemäß Beispiel 1 im Vergleich zu Beispiel 2 einen geringeren Anstieg der Schmelzeflussrate nach Lagerung bei 300°C, also eine höhere thermische Stabilität des Polycarbonat-Molekulargewichtes aufweist. Auch die chemische Beständigkeit in der untersuchten Handcreme ist deutlich besser. Gleichzeitig ist der Yellowness Index der BPA-armen Zusammensetzung bei hohen Verarbeitungstemperaturen geringer. Höhere BPA-Gehalte führen also in PC/ABS-Zusammensetzungen zu verschlechterten technischen Eigenschaften.

Die Beispiele in Tabelle 1 zeigen darüber hinaus, dass bei Verwendung basisch gefällter Pfropfpolymerisate gemäß Komponente B in den nicht flammwidrig ausgerüsteten erfindungsgemäßen Zusammensetzungen überraschend bei Verwendung von Polycarbonat, welches im Phasengrenzflächenverfahren hergestellt wurde, der Gehalt an freiem BPA bei der Compoundierung deutlich weniger ansteigt (von 2 ppm aus dem Polycarbonat stammend auf 17 ppm gemessen in der compoundierten Zusammensetzung, also um 15 ppm) als bei Verwendung von Polycarbonat, welches im Schmelzepolymersiationsverfahren hergestellt wurde (von 22 ppm aus dem Polycarbonat stammend auf 76 ppm gemessen in der compoundierten Zusammensetzung, also um 54 ppm). Bei nicht flammwidrig ausgerüsteten Zusammensetzungen, bei denen ein basisch gefälltes oder basisch verunreinigtes Pfropfpolymersiat zum Einsatz kommt, ist somit die Verwendung von Polycarbonat hergestellt im Phasengrenzflächenverfahren besonders bevorzugt.

**Tabelle 2**: Zusammensetzung und Eigenschaften der flammgeschützten Formmassen

| Komponenten (Gew.-Teile) | Bsp. 3 | Bsp. 4 | Bsp. 5 | Bsp. 6 | Bsp. 7 (Vgl) | Bsp. 8 (Vgl) | Bsp. 9 (Vgl) | Bsp. 10 (Vgl) |
|---|---|---|---|---|---|---|---|---|
| A-1 | 77,5 | 77,5 | 77,5 | 77,5 | 77,5 | 77,5 | 77,5 | 77,5 |
| B-1 | 3,5 | 3,5 | 3,5 | 3,5 | 3,5 | 3,5 | 3,5 | 3,5 |
| C | 7,7 | 7,7 | 7,7 | 7,7 | 7,7 | 7,7 | 7,7 | 7,7 |
| D | 9,7 | 9,7 | 9,7 | 9,7 | 9,7 | 9,7 | 9,7 | 9,7 |
| E-1 | 0,8 | 0,8 | 0,8 | 0,8 | 0,8 | 0,8 | 0,8 | 0,8 |
| E-2 | 0,4 | 0,4 | 0,4 | 0,4 | 0,4 | 0,4 | 0,4 | 0,4 |
| E-3 | 0,1 | 0,1 | 0,1 | 0,1 | 0,1 | 0,1 | 0,1 | 0,1 |
| E-4 | 0,3 | 0,3 | 0,3 | 0,3 | 0,3 | 0,3 | 0,3 | 0,3 |
| BPA-Gehalt gemessen [ppm] | 3 | 22 | 49 | 63 | 96 | 114 | 153 | 207 |
| zugesetztes BPA [ppm] | 0 | 20 | 40 | 60 | 80 | 100 | 150 | 200 |
| **Eigenschaften** | | | | | | | | |
| Vicat B 120 | 109 | 109 | 109 | 109 | 109 | 109 | 109 | 109 |
| UL 94 V bei 1,5 mm (7d/70°C) Dicke/ Gesamtnachbrennzeit | V-0/7s | V-0/7s | V-0/8s | V-0/8s | V-0/10s | V-0/11s | V-0/11s | V-0/12s |
| MVR 240°C/5kg [ccm/10 min] | 10,71 | 10,80 | 10,97 | 11,10 | 11,30 | 11,40 | 11,50 | 11,70 |
| MVR 240°C/5 min nach Thermo-Lagerung 300°C/15 min [ccm/10 min] | 15,90 | 16,90 | 17,80 | 18,30 | 19,10 | 19,40 | 19,90 | 20,70 |
| delta MVR nach Thermo-Lagerung 300°C/15 min [%] | 48,4 | 56,4 | 62,2 | 64,8 | 69,0 | 70,2 | 73,0 | 76,9 |
| ESC-Test (Handcreme), 2,4%, Zeit bis zum Bruch, 260°C [h:min:sec] | 85:45:00 | 83:40:00 | 83:15:00 | 82:25:00 | 81:10:00 | 75:35:00 | 74:45:00 | 70:00:00 |
| Yellowness Index an MPL 310°C | 29,98 | 31,16 | 32,15 | 33,18 | 33,22 | 33,42 | 33,57 | 38,05 |

Die Beispiele 3 bis 10 sind nicht erfindungsgemäß.

Grundsätzlich kann freies, d.h. chemisch nicht gebundenes, BPA beispielsweise als Verunreinigung in BPA-basierten Polycarbonat oder als Verunreinigung in BPA-basierten Flammschutzmitteln in die Zusammensetzungen eingetragen werden, oder aber auch während einer thermischen Beanspruchung der zuvorgenannten Komponenten entstehen. In den nicht erfindungsgemäßen Beispielen 4-6 sowie in den Vergleichsbeispielen 7-10 wurde definierte geringe Anteile BPA dem BPA-armen Polycarbonat A-1 zugesetzt, um den Einfluß von BPA zu untersuchen. Alle Formmassen wurden unter schonenden Bedingungen hergestellt, um nicht zusätzlich und unkontrolliert BPA durch Zerzetzung von Polycarbonat in den Formmassen zu erzeugen.

In Tabelle 2 sind die Eigenschaften von flammgeschützten PC/ABS-Zusammensetzungen mit verschieden BPA-Gehalten zusammengefasst. Auch in den flammgeschützten Zusammensetzungen wird deutlich, dass die Zusammensetzungen gemäß Beispielen 3-6 im Vergleich zu den Beispielen 7-10 geringere Schmelzeviskositäten und geringere Anstiege der Schmelzeviskositäten nach Lagerung bei 300°C, also deutlich höhere thermische Stabilitäten aufweisen. Auch die chemische Beständigkeit in der untersuchten Handcreme ist deutlich besser. Gleichzeitig ist der Yellowness Index der BPA-armen Zusammensetzungen geringer. Höhere BPA-Gehalte führen also in PC/ABS-Zusammensetzungen zu verschlechterten technischen Eigenschaften, während niedrigere BPA-Gehalte kleiner 70 ppm überraschenderweise zu deutlich besseren Eigenschaften führen.

## Patentansprüche

1. Thermoplastische Formmassen enthaltend

   A) 51,0 bis 99,5 Gew.-Teile mindestens eines aromatischen Polycarbonats mit einer OH-Endgruppenkonzentration von kleiner als 200 ppm,
   B) 0,5 bis 49,0 Gew.-Teile mindestens eines basisch gefällten oder basisch verunreinigten Pfropfpolymerisats,
   C) 0,0 - 30,0 Gew.-Teile Vinyl(Co)Polymerisat und/oder Polyalkylenterephthalat,
   E) 0,0 - 40,0 Gew.-Teile weitere übliche Additive,

   wobei die Summe der Gewichtsteile der Komponenten A) bis E) sich zu 100 Gewichtsteilen addiert,
   wobei der Gehalt an freiem Bisphenol-A in der Gesamtzusammensetzung kleiner als 70 ppm und größer als 0,5 ppm ist,
   und wobei kein phosphorhaltiges Flammschutzmittel enthalten ist.

2. Formmasse nach Anspruch 1 enthaltend

   A) 61,0 bis 96,5 Gew.-Teile mindestens eines aromatischen Polycarbonats,
   B) 1,0 bis 39,0 Gew.-Teile mindestens eines Pfropfpolymerisats,
   C) 1,0 bis 20,0 Gew.-Teile Vinyl(Co)Polymerisat und/oder Polyalkylenterephthalat,
   E) 0,5 bis 10 Gew.-Teile weitere übliche Additive,

   wobei die Summe der Gewichtsteile der Komponenten A) bis E) sich zu 100 Gewichtsteilen addiert, und
   wobei der Gehalt an freiem Bisphenol-A in der Gesamtzusammensetzung kleiner als 70 ppm und größer als 0,5 ppm ist, und wobei die Formassen frei von phosphorhaltigen Flammschutzmitteln sind.

3. Formmasse nach einem der Ansprüche 1 bis 2, **dadurch gekennzeichnet, daß** der Gehalt an freiem Bisphenol-A in der Gesamtzusammensetzung kleiner als 50 ppm und größer als 0,5 ppm ist.

4. Formmasse nach einem der Ansprüche 1 bis 2, **dadurch gekennzeichnet, daß** der Gehalt an freiem Bisphenol-A in der Gesamtzusammensetzung kleiner als 30 ppm und größer als 0,5 ppm ist.

5. Formmasse nach einem der Ansprüche 1 bis 2, **dadurch gekennzeichnet, daß** die Komponente A ein mittleres Gewichtsmittelmolekulargewicht $M_w$ von 26.000 bis 32.000 g/mol, gemessen durch Gelpermeationschromatographie mit Polycarbonatstandard, aufweist.

6. Formmasse nach einem der Ansprüche 1 bis 2, **dadurch gekennzeichnet, daß** als Komponente E) neben optionalen weiteren Additiven mindestens ein Stabilisator in einer Konzentration von 0,01 bis 0,5 Gew.-Teilen enthalten ist.

7. Formmasse nach einem der Ansprüche 1 bis 2, **dadurch gekennzeichnet, daß** als Komponente E) neben optionalen

weiteren Additiven ein fluoriertes Polyolefin in einer Konzentration von 0,05 bis 5,0 Gew.-Teilen enthalten ist.

**8.** Formmasse nach einem der Ansprüche 1 bis 2, enthaltend Pfropfpolymerisate aus

B.1) 5 bis 95Gew.-Teile, einer Mischung aus

B.1.1) 50 bis 95 Gew.-Teilen Styrol, $\alpha$-Methylstyrol, methylkernsubstituiertem Styrol, $C_1$-$C_8$-Alkylmethacrylat,$C_1$-$C_8$-Alkylacrylat, oder Mischungen dieser Verbindungen und
B.1.2) 5 bis 50 Gew.-Teilen Acrylnitril, Methacrylnitril $C_1$-$C_8$-Alkylmethacrylaten, $C_1$-$C_8$-Alkylacrylat, Maleinsäureanhydrid, $C_1$-$C_4$-alkyl- bzw. -phenyl-N-substituierte Maleinimide oder Mischungen dieser Verbindungen auf

B.2) 5 bis 95 Gew.-Teilen einer kautschukhaltigen Pfropfgrundlage.

**9.** Formmasse nach Anspruch 8, enthaltend als Kautschuke der Pfropfgrundlage B.2 Dienkautschuke, Acrylatkautschuke, Silikonkautschuke, Silikon-Acrylat-Kompositkautschuke oder Ethylen-Propylen-Dien-Kautschuke.

**10.** Zusammensetzungen nach einem der Ansprüche 1 bis 2 enthaltend als Komponente E mindestens ein Additiv ausgewählt aus der Gruppe bestehend aus Flammschutzsynergisten, Antidrippingmittel, Gleit- und Entformungsmittel, Nukleiermittel, Stabilisatoren, Antistatika, Farbstoffe und Pigmente.

**11.** Formkörper hergestellt aus Formmassen gemäß Anspruch 1.

## Claims

**1.** Thermoplastic molding compositions comprising

A) from 51.0 to 99.5 parts by weight of at least one aromatic polycarbonate with OH end group concentration smaller than 200 ppm,
B) from 0.5 to 49.0 parts by weight of at least one graft polymer precipitated under basic conditions or comprising basic impurities,
C) from 0.0 to 30.0 parts by weight of vinyl (co)polymer and/or polyalkylene terephthalate,
E) from 0.0 to 40.0 parts by weight of other conventional additives,

where the sum of the parts by weight of components A) to E) gives a total of 100 parts by weight,
where the content of free bisphenol A in the entire composition is smaller than 70 ppm and greater than 0.5 ppm,
and where no phosphorus-containing flame retardant is present.

**2.** Molding composition according to Claim 1 comprising

A) from 61.0 to 96.5 parts by weight of at least one aromatic polycarbonate,
B) from 1.0 to 39.0 parts by weight of at least one graft polymer,
C) from 1.0 to 20.0 parts by weight of vinyl (co)polymer and/or polyalkylene terephthalate,
E) from 0.5 to 10 parts by weight of other conventional additives,

where the sum of the parts by weight of components A) to E) gives a total of 100 parts by weight, and
where the content of free bisphenol A in the entire composition is smaller than 70 ppm and greater than 0.5 ppm,
and where the molding compositions are free from phosphorus-containing flame retardants.

**3.** Molding composition according to either of Claims 1 and 2, **characterized in that** the content of free bisphenol A in the entire composition is smaller than 50 ppm and greater than 0.5 ppm.

**4.** Molding composition according to either of Claims 1 and 2, **characterized in that** the content of free bisphenol A in the entire composition is smaller than 30 ppm and greater than 0.5 ppm.

**5.** Molding composition according to either of Claims 1 and 2, **characterized in that** the weight-average molar mass Mw of component A is from 26 000 to 32 000 g/mol, measured by gel permeation chromatography with polycarbonate

standard.

**6.** Molding composition according to either of Claims 1 and 2, **characterized in that** component E) present comprises a concentration of from 0.01 to 0.5 parts by weight of at least one stabilizer, alongside optional other additives.

**7.** Molding composition according to either of Claims 1 and 2, **characterized in that** component E) present comprises a concentration of from 0.05 to 5.0 parts by weight of a fluorinated polyolefin, alongside optional other additives.

**8.** Molding composition according to either of Claims 1 and 2, comprising graft polymers of

B.1) from 5 to 95 parts by weight of a mixture of

B.1.1) from 50 to 95 parts by weight of styrene, $\alpha$-methylstyrene, methyl-ring-substituted styrene, $C_1$-$C_8$-alkyl methacrylate,$C_1$-$C_8$-alkyl acrylate, or a mixture of these compounds, and
B.1.2) from 5 to 50 parts by weight of acrylonitrile, methacrylonitrile, $C_1$-$C_8$-alkyl methacrylates, $C_1$-$C_8$-alkyl acrylate, maleic anhydride, $C_1$-$C_4$-alkyl- or -phenyl-N-substituted maleimides, or a mixture of said compounds,

B.2) from 5 to 95 parts by weight of a rubber-containing graft base.

**9.** Molding composition according to Claim 8, comprising, as rubbers of the graft base B.2, diene rubbers, acrylate rubbers, silicone rubbers, silicone-acrylate composite rubbers, or ethylenepropylene-diene rubbers.

**10.** Compositions according to either of Claims 1 and 2 comprising, as component E, at least one additive selected from the group consisting of flame retardant synergists, antidripping agents, lubricants and mold-release agents, nucleating agents, stabilizers, antistatic agents, dyes, and pigments.

**11.** Molding produced from molding compositions according to Claim 1.

## Revendications

**1.** Matériaux de moulage thermoplastiques, contenant :

A) 51,0 à 99,5 parties en poids d'au moins un polycarbonate aromatique ayant une concentration en groupes terminaux OH inférieure à 200 ppm,
B) 0,5 à 49,0 parties en poids d'au moins un polymère greffé précipité par des bases ou contaminé par des bases,
C) 0,0 à 30,0 parties en poids d'un (co)polymère de vinyle et/ou d'un polyalkylène téréphtalate,
E) 0,0 à 40,0 parties en poids d'autres additifs usuels,

la somme des parties en poids des composants A) à E) étant de 100 parties en poids,
la teneur en bisphénol A libre dans la composition totale étant inférieure à 70 ppm et supérieure à 0,5 ppm,
et aucun agent ignifuge contenant du phosphore n'étant contenu.

**2.** Matériau de moulage selon la revendication 1, contenant :

A) 61,0 à 96,5 parties en poids d'au moins un polycarbonate aromatique,
B) 1,0 à 39,0 parties en poids d'au moins un polymère greffé,
C) 1,0 à 20,0 parties en poids d'un (co)polymère de vinyle et/ou d'un polyalkylène téréphtalate,
E) 0,5 à 10 parties en poids d'autres additifs usuels,

la somme des parties en poids des composants A) à E) étant de 100 parties en poids, et
la teneur en bisphénol A libre dans la composition totale étant inférieure à 70 ppm et supérieure à 0,5 ppm, et les matériaux de moulage étant exempts d'agents ignifuges contenant du phosphore.

**3.** Matériau de moulage selon l'une quelconque des revendications 1 à 2, **caractérisé en ce que** la teneur en bisphénol A libre dans la composition totale est inférieure à 50 ppm et supérieure à 0,5 ppm.

4. Matériau de moulage selon l'une quelconque des revendications 1 à 2, **caractérisé en ce que** la teneur en bisphénol A libre dans la composition totale est inférieure à 30 ppm et supérieure à 0,5 ppm.

5. Matériau de moulage selon l'une quelconque des revendications 1 à 2, **caractérisé en ce que** le composant A présente un poids moléculaire moyen en poids $M_w$ de 26 000 à 32 000 g/mol, mesuré par chromatographie par perméation de gel avec un étalon polycarbonate.

6. Matériau de moulage selon l'une quelconque des revendications 1 à 2, **caractérisé en ce qu'**au moins un stabilisateur est contenu en tant que composant E) en une concentration de 0,01 à 0,5 partie en poids, en plus d'autres additifs optionnels.

7. Matériau de moulage selon l'une quelconque des revendications 1 à 2, **caractérisé en ce qu'**une polyoléfine fluorée est contenue en tant que composant E) en une concentration de 0,05 à 5,0 parties en poids, en plus d'autres additifs optionnels.

8. Matériau de moulage selon l'une quelconque des revendications 1 à 2, contenant des polymères greffés constitués par :

   B.1) 5 à 95 parties en poids d'un mélange de

      B.1.1) 50 à 95 parties en poids de styrène, d'a-méthylstyrène, de styrène à substitution méthyle sur le noyau, de méthacrylate d'alkyle en $C_1$-$C_8$, d'acrylate d'alkyle en $C_1$-$C_8$ ou de mélanges de ces composés, et
      B.1.2) 5 à 50 parties en poids d'acrylonitrile, de méthacrylonitrile, de méthacrylates d'alkyle en $C_1$-$C_8$, d'acrylate d'alkyle en $C_1$-$C_8$, d'anhydride de l'acide maléique, de maléinimides N-substitués par alkyle en $C_1$-$C_4$ ou phényle, ou de mélanges de ces composés, sur

   B.2) 5 à 95 parties en poids d'une base de greffage contenant du caoutchouc.

9. Matériau de moulage selon la revendication 8, contenant en tant que caoutchoucs de la base de greffage B.2 des caoutchoucs diéniques, des caoutchoucs d'acrylate, des caoutchoucs de silicone, des caoutchoucs composites de silicone et d'acrylate, ou des caoutchoucs d'éthylène-propylène-diène.

10. Composition selon l'une quelconque des revendications 1 à 2, contenant en tant que composant E au moins un additif choisi dans le groupe constitué par les synergistes ignifuges, les agents anti-égouttement, les agents lubrifiants et de démoulage, les agents de nucléation, les stabilisateurs, les antistatiques, les colorants et les pigments.

11. Corps moulé fabriqué à partir de matériaux de moulage selon la revendication 1.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 1170141 A
- DE 1810993 A
- DE 2259565 A
- DE 2329548 A
- DE 2818679 A
- EP 900827 A
- EP 0363608 A
- EP 0704488 A
- EP 747424 A
- EP 1003809 A
- EP 0983315 A
- JP 2002348458 A
- DE S1495626 A
- DE 2232877 A
- DE 2703376 A
- DE 2714544 A
- DE 3000610 A
- DE 3832396 A
- DE 3007934 A
- DE 2842005 A
- DE 3334782 A
- DE OS1694173 A
- US S3564077 P
- DE OS2348377 A
- US S3919353 P
- DE 3704657
- DE 3704655
- DE 3631540
- DE 3631539
- DE 2407674 A
- DE 2407776
- DE 2715932
- DE 1900270 A
- US S3692744 P
- US S3671487 P
- US 3723373 A
- US 3838092 A


### In der Beschreibung aufgeführte Nicht-Patentliteratur


- Herstellung aromatischer Polycarbonate siehe beispielsweise Schnell. Chemistry and Physics of Polycarbonates. Interscience Publishers, 1964
- **HORBACH, A. ; VEIEL, U. ; WUNDERLICH, H.** *Makromolekulare Chemie,* 1965, vol. 88, 215-231
- **HOUBEN-WEYL.** Methoden der Organischen Chemie. Georg Thieme-Verlag, 1961, vol. 14/1, 393-406
- **C.B. BUCKNALL.** Toughened Plastics. Appl. Science Publishers, 1977
- **M. HOFFMANN ; H. KRÖMER ; R. KUHN.** Polymeranalytik I und II. Georg Thieme-Verlag, 1977
- **W. SCHOLTAN ; H. LANGE ; KOLLOID, Z.** *Z. Polymere,* 1972, vol. 250, 782-796
- Kunststoff-Handbuch. Carl-Hanser-Verlag, 1973, vol. VIII, 695
- Vinyl and Related Polymers. Schildknecht. John Wiley & Sons, Inc, 1962, 484-494
- Fluorpolymers. Wall. John Wiley & Sons, Inc, 1970, vol. 13, 623-654
- Modern Plastics Encyclopedia. Mc Graw-Hill, Inc, Oktober 1970, vol. 47, 134, , 774
- Modern Plastics Encyclopedia. Mc Graw-Hill, Inc, Oktober 1975, vol. 52, 27, , 28, , 472
- **W. SCHOLTAN et al.** *Kolloid-Z. und Z. Polymere,* 1972, vol. 250, 782-796